# EUROPÄISCHE PATENTANMELDUNG

(11) **EP 2 657 541 A2**
(43) Veröffentlichungstag der Anmeldung: **30.10.2013**
(21) Anmeldenummer: 13164972.5
(22) Anmeldetag: 23.04.2013
(51) Int. Cl.: F15B 15/14, F15B 15/22

(54) **Dichtungsanordnung für eine Zylinderabdichteinrichtung**

(30) Priorität: 24.04.2012 DE 102012103595
(71) Anmelder: Parker Hannifin Manufacturing Germany GmbH & Co. KG, 74321 Bietigheim-Bissingen (DE)
(72) Erfinder: Schröppel, Winfried, 72800 Eningen (DE); Rieger, Bernhard, 71665 Vaihingen/Enz (DE)
(74) Vertreter: Witte, Weller & Partner

(57) **Zusammenfassung**

Die vorliegende Erfindung betrifft eine Dichtungsanordnung für eine Zylinderabdichteinrichtung, insbesondere einen Zylinderkopf (104) oder einen Zylinderdeckel (103) eines Pneumatikzylinders (100) mit einer ersten Dichtungsvorrichtung (131, 141) mit einer Stangendichtung (142)oder einer Zylinderdeckeldichtung (132) und einer zweiten Dichtungsvorrichtung (133, 143) mit einer Dämpfungsdichtung (134, 144), wobei die erste Dichtungsvorrichtung und die zweite Dichtungsvorrichtung fest miteinander verbunden und einstückig ausgebildet sind.

## Beschreibung

Die vorliegende Erfindung betrifft eine Dichtungsanordnung für eine Zylinderabdichteinrichtung eines Pneumatikzylinders. Ferner betrifft die Erfindung eine Zylinderabdichteinrichtung für einen Pneumatikzylinder. Schließlich betrifft die Erfindung auch einen Pneumatikzylinder.

Pneumatikzylinder werden in vielen technischen Bereichen eingesetzt und sind im Allgemeinen hinlänglich bekannt. Eine Beschreibung von Pneumatikzylindern sowie bei Pneumatikzylindern eingesetzten Pneumatikdichtungen sind ausführlich in dem Standardwerk "Fachwissen Dichtungstechnik", Kapitel 6 "Pneumatikdichtungen" (erhältlich unter http://www.fachwissen-dichtungstechnik.de) beschrieben. Dieses Standardwerk beschreibt zudem die grundsätzlichen Anforderungen an Dichtungen in der Pneumatiktechnik.

Die wesentlichen Elemente eines Pneumatikzylinders sind das Zylindergehäuse (bzw. Zylinderrohr), das endseitig durch Zylinderabdichteinrichtungen, nämlich einen Zylinderkopf und einen Zylinderdeckel, abgedichtet ist. In dem Zylindergehäuse verfährt eine Kolbenstange mit einem Kolben und beidseitig angebrachten Dämpfungskolben. Zur Abdichtung werden im Allgemeinen diverse Dichtungen eingesetzt, nämlich Kolben- und Stangendichtungen, Schmutzabstreifer und Dichtungen zur Drosselung der vor dem Endanschlag aus dem Dämpfungsraum abströmenden Luft. Solche Dichtungen in verschiedenen Ausgestaltungen sind beispielsweise in der EP 19 18 592 A1 und der EP 2 107 256 A1 beschrieben.

In der DE 198 22 805 A1 wird eine Dichtungsanordnung mit einem Träger zur Anbringung eines Dichtelements zur Abdichtung relativ zueinander bewegter Maschinenteile, insbesondere eine Dichtung zur Abdichtung einer axial bewegbaren Kolbenstange eines Kolbens für Fluiddämpfer, Luft- und Hydraulikzylinder, wobei das Dichtelement mit dem Träger als Mehrkomponentenbauteil verbunden ist und das Dichtelement ein Zentrierelement zur Fixierung eines Maschinenteils, insbesondere eines Innenzylinders des Kolbens, aufweist, beschrieben.

In der DE 198 31 523 A1 wird eine Stangendichtung für hydraulische, pneumatische oder hydropneumatische Aggregate, insbesondere für Schwingungsdämpfer oder Federbeine, wobei eine üblicherweise als Kolbenstange ausgeführte Stange axial beweglich in einem Behälter geführt und mittels der Stangendichtung abgedichtet ist, die Stangendichtung aus gummielastischem Werkstoff besteht und einen normalerweise fest mit einer Versteifungsscheibe verbundenen Dichtungskörper aufweist, der als statisches Dichtelement im Außenbereich eingespannt ist und im Bereich des Innendurchmessers einen axialen Ansatz besitzt, der mindestens eine mit radialer Vorspannung gegen die Stange gedrückte Dichtlippe trägt, wobei zur Vorspannungsänderung der Dichtlippe der axiale Ansatz mit einer dem Dichtungskörper gegenüberliegenden Anlage versehen ist, auf der sich ein eine axiale Dehnung des Ansatzes bewirkendes Federelement abstützt, das zumindest als axiale Druckfeder wirksam ist, beschrieben.

In der EP 1 818 579 A1 wird eine Abstreiferanordnung, umfassend einen Abstreifer mit einer Abstreiflippe zum Abstreifen von abzustreifendem Medium von der abzustreifenden Oberfläche (8) eines ersten Maschinenelements, wobei die Abstreiflippe die abzustreifende Oberfläche unter elastischer radialer Vorspannung anliegend berührt und wobei der Abstreifer in einem radial in Richtung des ersten Maschinenelements offenen Einbauraum des zweiten Maschinenelements schwimmend angeordnet ist, beschrieben.

Der Erfindung liegt die Aufgabe zugrunde, eine präzisere und kostengünstigere Dichtungsanordnung für eine Zylinderabdichteinrichtung, insbesondere einen Zylinderkopf oder Zylinderdeckel, eines Pneumatikzylinders bereit zu stellen, die zudem eine geringere Anzahl an Fehlerquellen besitzt. Der Erfindung liegt ferner die Aufgabe zugrunde, eine Zylinderabdichteinrichtung, insbesondere einen Zylinderkopf oder Zylinderdeckel, für einen Pneumatikzylinder sowie einen solchen Pneumatikzylinder bereit zu stellen.

Die Erfindung wird erfindungsgemäß gelöst durch eine Dichtungsanordnung für eine Zylinderabdichteinrichtung eines Pneumatikzylinders mit
- einer ersten Dichtungsvorrichtung mit einer Stangendichtung oder einer Zylinderdeckeldichtung und
- einer zweiten Dichtungsvorrichtung mit einer Dämpfungsdichtung,
wobei die erste Dichtungsvorrichtung und die zweite Dichtungsvorrichtung fest miteinander verbunden und einstückig ausgebildet sind.

Die Erfindung wird ferner erfindungsgemäß gelöst durch eine Zylinderabdichteinrichtung, für einen Pneumatikzylinder mit einem Zylinderabdichtgehäuse, und einer erfindungsgemäßen Dichtungsanordnung, die innerhalb des Zylinderabdichtgehäuses angeordnet ist.

Die Erfindung wird darüber hinaus erfindungsgemäß gelöst durch einen Pneumatikzylinder mit einem Zylinderrohr, einem Zylinderkopf, einem Zylinderdeckel und einer Kolbenstange mit einem Kolben, wobei der Zylinderkopf und/oder der Zylinderdeckel als erfindungsgemäße Zylinderabdichteinrichtung ausgestaltet ist.

Der vorliegenden Erfindung liegt die Erkenntnis zugrunde, dass durch eine Integration mehrerer, bisher durch einzelne (separate) Dichtungselemente realisierter Funktionen Vorteile erzielt werden und die gestellte Aufgabe gelöst werden kann. Insbesondere wurde erkannt, dass es möglich und sinnvoll ist, zwei wesentliche Funktionselemente der Dichtungsanordnung für eine Zylinderabdichteinrichtung eines Pneumatikzylinders fest miteinander zu verbinden und einstückig auszubilden, die nachfolgend als erste und zweite Dichtungsvorrichtung bezeichnet werden sollen. Bei einer Dichtungsanordnung für einen Zylinderkopf soll erfindungsgemäß insbesondere als erste Dichtungsvorrichtung eine Stangendichtung mit einer Dämpfungsdichtung als zweiter Dichtungsvorrichtung fest miteinander verbunden und einstückig ausgebildet sein. Bei einer Dichtungsanordnung für einen Zylinderdeckel soll insbesondere eine Zylinderdeckeldichtung als erster Dichtungsvorrichtung mit einer Dämpfungsdichtung als zweiter Dichtungsvorrichtung fest miteinander verbunden und einstückig ausgebildet sein.

Erfindungsgemäß wird somit einerseits die Anzahl der Einzelteile reduziert, was allein schon eine Kostenreduktion bewirkt. Eine einstückig ausgebildete Dichtungsanordnung kann ferner als Einzelteil in ein entsprechendes Zylinderabdichtgehäuse, insbesondere ein Zylinderkopfgehäuse eines Zylinderkopfes bzw. ein Zylinderdeckelgehäuse eines Zylinderdeckels, eingelegt oder eingespritzt werden, wodurch Fehlerquellen bei der Montage gegenüber bekannten Dichtungsanordnungen reduziert werden. Ferner wird dadurch erreicht, dass alle Funktionsbereiche optimal konzentrisch angeordnet sind. Auch Toleranzen von Gehäuse und Dichtungsanordnung bzw. Führungen können reduziert werden. Schließlich sind erfindungsgemäß die Dichtstellen auch auf die eigentlichen Funktionsdichtstellen reduziert, so dass beispielsweise für eine Stangendichtung in besonderen Ausgestaltungen auf eine statische Dichtlippe verzichtet werden kann.

In einer bevorzugten Ausgestaltung der erfindungsgemäßen Dichtungsanordnung ist vorgesehen, dass die erste Dichtungsvorrichtung und die zweite Dichtungsvorrichtung durch Spritzguss aus demselben Material hergestellt sind. Dies hat den Vorteil einer kostengünstigeren und präziseren Herstellung der Dichtungsanordnung.

In einer weiteren bevorzugten Ausgestaltung der erfindungsgemäßen Dichtungsanordnung ist vorgesehen, dass die erste Dichtungsvorrichtung an ihrer von der zweiten Dichtungsvorrichtung abgewandten Stirnseite eine Abstreiflippe aufweist, die einstückig mit der ersten und der zweiten Dichtungsvorrichtung ausgebildet ist. Dadurch wird eine weitere in besonderen Ausgestaltungen wesentliche Funktion in die Dichtungsanordnung integriert, so dass auf ein weiteres separates Dichtungselement verzichtet werden kann.

Bevorzugt ist ferner vorgesehen, dass die erste Dichtungsvorrichtung eine Führungsbuchse aufweist, die in einer Aufnahme an der Innenseite der ersten Dichtungsvorrichtung angeordnet ist. Auch dadurch wird eine weitere Vereinfachung des Aufbaus der Dichtungsanordnung und somit eine weitere Kostenreduzierung erreicht. Die Führungsbuchse, die beispielsweise aus einem Metall oder einem anderem stabilen Werkstoff hergestellt ist, kann somit vorab einfach in die Dichtungsanordnung eingefügt werden, bevor die Dichtungsanordnung in dem jeweiligen Gehäuse montiert wird. Alternativ kann die Führungseinrichtung bzw. eine Führungsbuchse vor dem Einspritzen entsprechend in der Spritzgießform positioniert und dann mit dem Dichtungswerkstoff formschlüssig umspritzt werden. Vorteilhaft ist auch eine Haftung zwischen Führungseinrichtung und Dichtungswerkstoff.

Ferner ist in einer Ausgestaltung vorgesehen, dass die zweite Dichtungsvorrichtung an ihrer von der ersten Dichtungsvorrichtung abgewandten Stirnseite Anschlagpuffer aufweist, die einstückig mit der ersten und der zweiten Dichtungsvorrichtung ausgebildet sind. Auch dadurch wird eine weitere Integrationsstufe erreicht, so dass auf weitere separate Elemente verzichtet werden kann.

Bevorzugt ist an der Verbindung zwischen der ersten Dichtungsvorrichtung und der zweiten Dichtungsvorrichtung eine von der Innenseite der Dichtungsanordnung zur Außenseite der Dichtungsanordnung verlaufende Öffnung vorgesehen. Diese Öffnung ist beispielsweise als Bohrung für einen Druckluftanschluss ausgestaltet, die in radialer Richtung, also senkrecht zur Zylinderlängsachse, verläuft. Bei dieser Ausgestaltung kann somit auch der Druckluftanschluss in die erfindungsgemäße Dichtungsanordnung integriert werden.

Die zweite Dichtungsvorrichtung weist vorteilhafterweise einen von ihrer von der ersten Dichtungsvorrichtung abgewandten Stirnseite zur Außenseite der Dichtungsanordnung verlaufenden Kanal auf. Dieser Kanal dient insbesondere als Bypass-Kanal, der eine Dämpfung der Bewegung des Kolbens kurz vor dem Endanschlag bewirkt. Dieser Kanal verengt vorzugsweise den Austrittsweg für die auszutretende Luft aus dem Zylinderinnenraum in bekannter Art und Weise. Auch diese Funktionalität ist somit bei dieser Ausgestaltung in die erfindungsgemäße Dichtungsanordnung integriert.

Ferner weist die zweite Dichtungsvorrichtung vorteilhafterweise eine Einstellvorrichtung, insbesondere ein Drosselventil oder eine Ventilnadel, zur Einstellung der Durchflussmenge des Kanals auf. Dadurch lässt sich die Dämpfungswirkung der Dämpfung des Kolbens vor dem Endanschlag einstellen.

Ebenfalls möglich ist es an der zweiten Dichtungsvorrichtung der Dichtungsanordnung zusätzlich eine statische Dichtung vorzusehen.

Bei einer bevorzugten Ausgestaltung der Zylinderabdichteinrichtung ist die Dichtungsanordnung in das Zylinderabdichtgehäuse, an dessen Innenseite anliegend, eingesetzt oder eingespritzt. Dadurch wird insbesondere eine gewünschte hohe Präzision und eine einfache Montage erreicht, da nicht diverse separate Einzelteile separat in das jeweilige Zylinderabdichtgehäuse, also das Zylinderkopfgehäuse oder das Zylinderdeckelgehäuse, montiert werden müssen. Ferner hat insbesondere das Einspritzen der Dichtungsanordnung in das Zylinderabdichtgehäuse den Vorteil, dass das Zylinderabdichtgehäuse nicht so präzise gefertigt werden muss und/oder das dessen innere Oberflächen nicht zwingend eine Oberflächenfeinbearbeitung, insbesondere ein Polieren oder Abschleifen, erfordern, wie dies bei den bekannten Dichtungsanordnungen der Fall ist, da Oberflächenunebenheiten durch das Einspritzen der erfindungsgemäßen Dichtungsanordnung von selbst ausgeglichen werden.

Ferner ist bevorzugt vorgesehen, dass zwischen dem Zylinderabdichtgehäuse und der Dichtungsanordnung ein Haftverbund besteht. Zur Erzielung des Haftverbundes sind verschiedene Ausführungsformen denkbar.

Der Haftverbund ist in einer Ausgestaltung durch Verwendung sich selbst verbindender Materialien für das Zylinderabdichtgehäuse und die Dichtungsanordnung erreicht. Alternativ ist in einer Ausgestaltung der Haftverbund durch Verwendung eines Haftvermittlers zwischen dem Zylinderabdichtgehäuse und der Dichtungsanordnung erreicht. In noch einer weiteren Ausgestaltung ist ein Haftverbund durch Behandlung der Oberfläche der Innenseite des Zylinderabdichtgehäuses und/oder der Oberfläche der Außenseite der Dichtungsanordnung vor Einbringen der Dichtungsanordnung in das Zylinderabdichtgehäuse erreicht. Aus einem Haftverbund zwischen Zylinderabdichtgehäuse und Dichtungswerkstoff ergeben sich Vorteile in der Art, dass durch die Haftung eventuelle Relativbewegungen und damit auch Verschleißerscheinungen der einzelnen Komponenten ausgeschlossen werden. Ferner vermindert ein Haftverbund die Geräuschbildung durch Relativbewegungen, wie sie bei einem rein formschlüssigen Verbund auftreten können.

Schließlich ist in einer Ausgestaltung vorgesehen, dass zwischen dem Zylinderabdichtgehäuse und der Dichtungsanordnung ein Formschluss besteht. Dies kann beispielsweise durch entsprechende Rauheit der inneren Oberfläche des Zylinderabdichtgehäuses und/oder der äußeren Oberfläche der Dichtungsanordnung erreicht werden. Auch dadurch wird somit eine sichere und präzise Montage der Dichtungsanordnung und ein dauerhaft fester Sitz der Dichtungsanordnung erreicht.

Die Erfindung wird nachfolgend anhand von Zeichnungen beispielhafter Ausführungsformen der Erfindung näher erläutert. Es zeigen:
- Fig. 1: einen Querschnitt durch einen bekannten Pneumatikzylinder mit bekannten Dichtungselementen,
- Fig. 2: einen Querschnitt durch einen erfindungsgemäßen Pneumatikzylinder mit erfindungsgemäßen Dichtungsanordnungen,
- Fig. 3: einen Querschnitt durch einen erfindungsgemäßen Zylinderkopf, und
- Fig. 4: einen Querschnitt durch einen erfindungsgemäßen Zylinderdeckel.

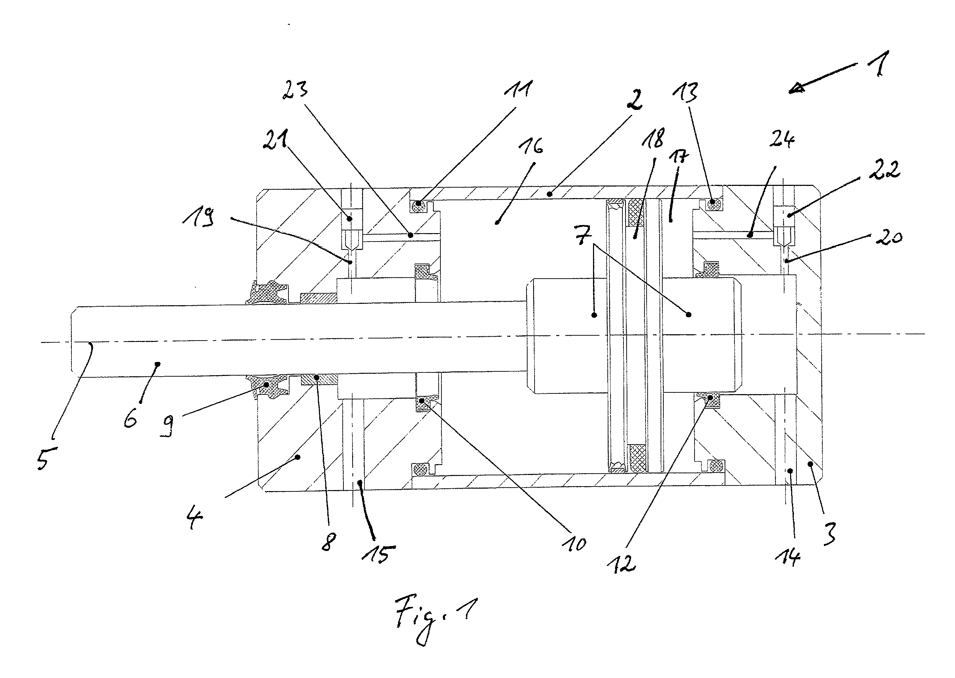

Fig. 1 zeigt einen Querschnitt durch ein Ausführungsbeispiel eines bekannten Pneumatikzylinders 1. Der Pneumatikzylinder 1 umfasst im Wesentlichen ein Zylinderrohr 2, einen Zylinderdeckel 3, einen Zylinderkopf 4 und eine in Richtung der Zylinderlängsachse 5 verfahrbare Kolbenstange 6 mit einem Kolben 18 und beidseitig angebrachten Dämpfungskolben 7. Zur Führung der Kolbenstange 6 ist eine Stangenführung 8 vorgesehen, die in einen entsprechenden Aufnahmeraum in den Zylinderkopf 4 eingebaut ist. Ferner sind in dem Zylinderkopf 4 entsprechende Einbauräume vorgesehen für einen Dichtabstreifer 9, eine Dämpfungsdichtung 10 und eine statische Dichtung 11, die beispielsweise als O-Ring ausgestaltet ist. Der Zylinderdeckel 3 weist ebenfalls Einbauräume auf, in die eine Dämpfungsdichtung 12 und eine statische Dichtung 13 eingebaut sind.

Der Kolben wird mittels Druckluft verfahren, die über Druckluftanschlüsse 14, 15 zugeführt wird, welche durch in radialer Richtung verlaufende Bohrungen in dem Zylinderdeckel 3 bzw. dem Zylinderkopf 4 realisiert sind. Die Druckluft wird dadurch in den Zylinderinnenraum 16 bzw. 17 vor bzw. hinter dem Kolben 18 eingepresst. Bei Umkehrung der Bewegungsrichtung des Kolbens 18 kann die Druckluft über die Druckluftanschlüsse 14, 15 wieder nach außen entweichen. Sobald die Dämpfungskolben 7 mit der jeweiligen Dämpfungsdichtung 10, 12 dichtend abschließen, kann die Druckluft lediglich über die Bypass-Kanäle 23, 24 und die Auslassbohrungen 19 bzw. 20 zu den Auslässen bzw. Druckluftanschlüssen gelangen. Dadurch wird eine Dämpfungswirkung vor dem Endanschlag des Kolbens bewirkt, wobei die Dämpfungswirkung zusätzlich mittels der Drosselventile 21, 22 einstellbar ist.

Wie aus Fig. 1 einfach erkennbar ist, sind die verschiedenen Dichtungsfunktionen durch eine Reihe von einzelnen Dichtungselementen realisiert. Diese Dichtungselemente werden einzeln gefertigt und müssen beim Zusammenbau des Pneumatikzylinders 1 separat eingebaut und justiert werden. Insbesondere die damit verbundenen Kosten und der Aufwand für den Einbau sowie die damit erreichbare Präzision sollen erfindungsgemäß verbessert werden.

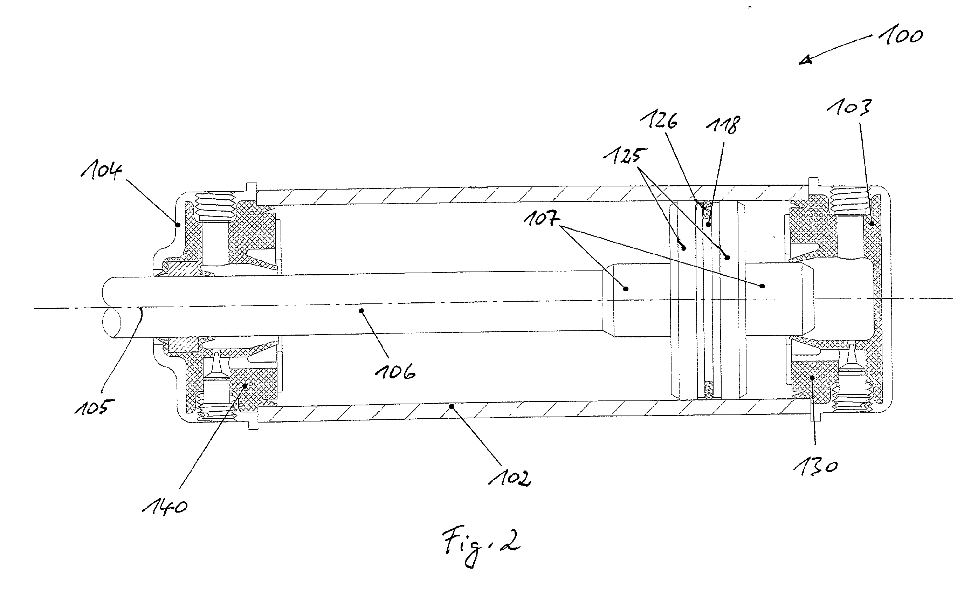

Fig. 2 zeigt einen Querschnitt durch ein Ausführungsbeispiel eines erfindungsgemäßen Pneumatikzylinders 100. Ähnlich wie der bekannte Pneumatikzylinder 1 weist der erfindungsgemäße Pneumatikzylinder 100 ein Zylinderrohr 102, einen Zylinderdeckel 103, einen Zylinderkopf 104 sowie eine in Richtung der Zylinderlängsachse 105 verfahrbare Kolbenstange 106 mit Dämpfungskolben 107 und einem Kolben 118 auf. An dem Kolben 118 sind ferner Kolbenführungen 125 sowie eine Kolbendichtung 126 vorgesehen.

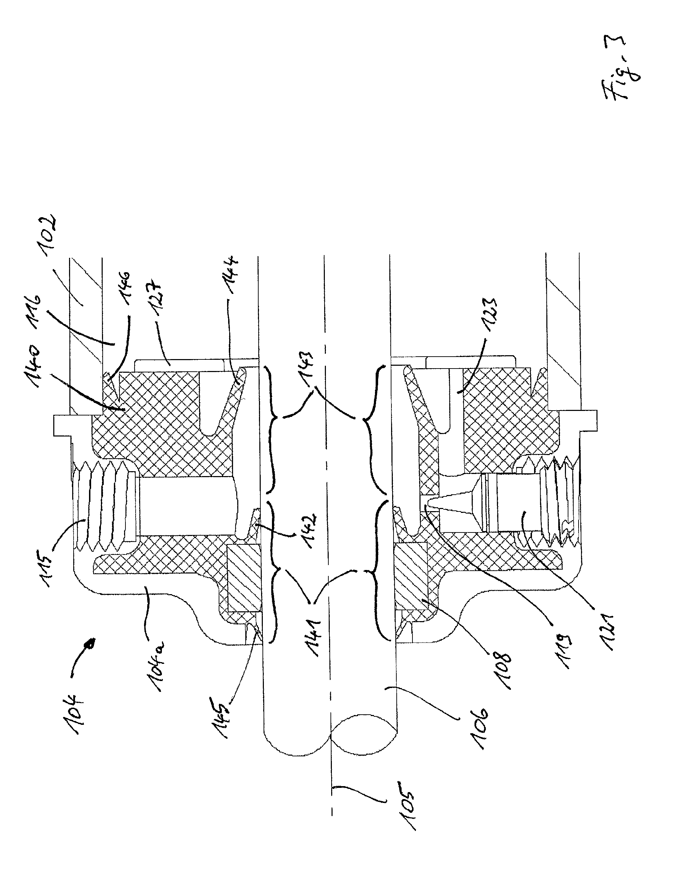

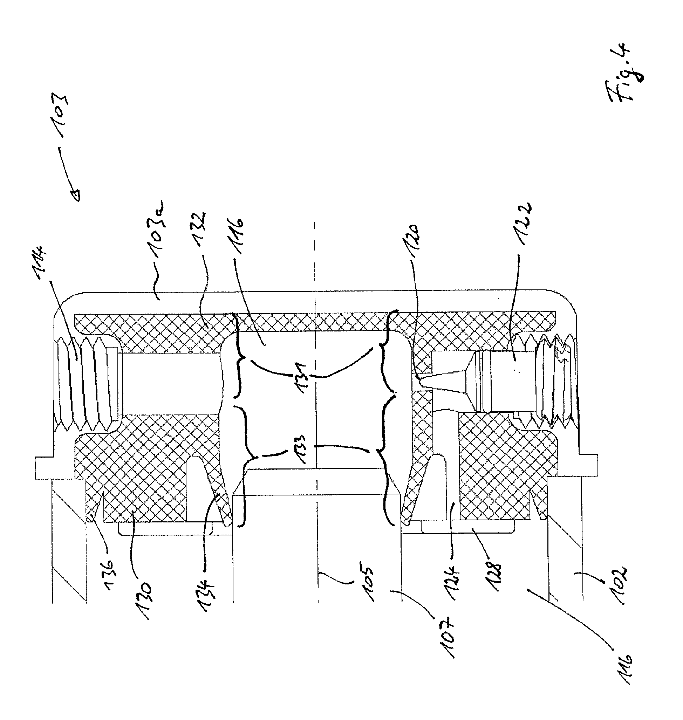

Anders als bei dem bekannten Pneumatikzylinder 1 sind bei dem erfindungsgemäßen Pneumatikzylinder 100 die einzelnen Dichtungselemente nicht durch separate Elemente realisiert, sondern sind als integrierte Dichtungsanordnungen 130 (in dem Zylinderdeckel 103) und 140 (in dem Zylinderkopf 104) ausgestaltet. Diese Dichtungsanordnungen 130, 140 sollen nachfolgend anhand der Fig. 3 und 4 näher erläutert werden.

Fig. 3 zeigt einen Querschnitt durch einen erfindungsgemäßen Zylinderkopf 104, wie er bei dem in Fig. 2 gezeigten Pneumatikzylinder 100 eingesetzt werden kann. Erfindungsgemäß ist zunächst vorgesehen, dass die Dichtungsanordnung 140 zwei Dichtungsvorrichtungen aufweist, nämlich eine erste Dichtungsvorrichtung 141 mit einer Stangendichtung 142 und eine zweite Dichtungsvorrichtung 143 mit einer Dämpfungsdichtung 144. Anders als bei bekannten Dichtungsanordnungen für Pneumatikzylinder sind diese beiden Dichtungsvorrichtungen 141 und 143 erfindungsgemäß fest miteinander verbunden und einstückig ausgebildet, was wesentliche Vorteile mit sich bringt. Es müssen nämlich nicht mehr einzelne Dichtelemente separat gefertigt und eingelegt werden, und es muss auch nicht mehr eine einzelne Justage einzelner Elemente erfolgen, sondern die gesamte Dichtungsanordnung 140 wird als ein Bauteil in das Zylinderkopfgehäuse 104a eingelegt oder eingespritzt. Dies hat den weiteren Vorteil, dass sämtliche Teile der Dichtungsanordnung 140 automatisch und gleichermaßen konzentrisch bezüglich der Zylinderlängsachse 105 angeordnet sind. Schließlich hat auch nicht jedes einzelne Dichtelement gesonderte Toleranzen, die sich bei mehreren Dichtungselementen in negativer Weise addieren können und somit insgesamt zu einer unerwünschten Gesamt-Toleranzabweichung führen können.

Bei der in Fig. 3 gezeigten Ausführungsform der Dichtungsanordnung 140 ist zudem an der ersten Dichtungsvorrichtung 141 eine Abstreiflippe 145 vorgesehen. Ferner ist zwischen der Abstreiflippe 145 und der Stangendichtung 142 ein Einbauraum für eine Stangenführung 108 vorgesehen.

An der zweiten Dichtungsvorrichtung ist ferner an dem Zylinderrohr 102 anliegend eine statische Dichtung 146 vorgesehen. Zum Zylinderinnenraum 116 hinweisend ist an die zweite Dichtungsvorrichtung 143 angrenzend ein Anschlagpuffer 127 als Anschlag für den Kolben 118 angeordnet.

Der Druckluftanschluss 115 führt bei dem gezeigten Ausführungsbeispiel der Dichtungsanordnung 140 mitten durch die Dichtungsanordnung 140 und trennt quasi an dem Durchführungsbereich die erste Dichtungsvorrichtung 141 von der zweiten Dichtungsvorrichtung 143 ab, wobei diese beiden Dichtungsvorrichtungen 141, 143, wie oben beschrieben, um den Druckluftanschluss 115 herum fest miteinander verbunden sind.

Auf der dem Druckluftanschluss 115 gegenüberliegenden Seite sind in der Dichtungsanordnung 140 ein Druckluftauslass 119, ein Bypass-Kanal 123 und ein Drosselventil 121 angeordnet, deren Funktionsweise der oben in Bezug auf den bekannten Pneumatikzylinder 1 beschriebenen Funktionsweise entspricht.

Ein Querschnitt durch einen erfindungsgemäßen Zylinderdeckel 103 mit einer erfindungsgemäßen Dichtungsanordnung 130, wie sie bei dem in Fig. 2 gezeigten Pneumatikzylinder 100 eingesetzt werden können, ist in Fig. 4 gezeigt. Grundsätzlich weist auch diese Dichtungsanordnung 130 eine erste Dichtungsvorrichtung 131 mit einer Zylinderdeckeldichtung 132 und eine zweite Dichtungsvorrichtung 133 mit einer Dämpfungsdichtung 134 auf. Diese beiden Dichtungsvorrichtungen 131 und 133 sind auch bei dieser erfindungsgemäßen Dichtungsanordnung 130 fest miteinander verbunden und einstückig ausgebildet, was bei bekannten Dichtungsanordnungen für Zylinderdeckel ebenfalls nicht der Fall ist. Dadurch ergeben sich erneut, die oben im Zusammenhang mit der Zylinderkopfdichtungsanordnung 140 beschriebenen Vorteile, insbesondere hinsichtlich des Montageaufwands, der Kosten und der Präzision. Bei dem gezeigten Ausführungsbeispiel der Dichtungsanordnung 130 weist die zweite Dichtungsvorrichtung 133 ferner eine statische Dichtung 136 auf, die an dem Zylinderrohr 102 anliegt. Ferner liegt die zweite Dichtungsvorrichtung 133 an einem Anschlagpuffer 128 an.

Ähnlich wie bei der Dichtungsanordnung 140 ist vorliegend ein Druckluftanschluss 114 vorgesehen, der in radialer Richtung mitten durch die Dichtungsanordnung 130 führt. Gegenüberliegend sind ferner ein Auslasskanal 120, ein Drosselventil 122 und ein Bypass-Kanal 124 vorgesehen, die in der oben beschriebenen Weise funktionieren, wobei die Zylinderdeckeldichtung 132 auch im Bereich des Auslasskanals 120 und des Drosselventils 122 eine Dichtwirkung aufweist.

Wie ferner oben in Bezug auf die Dichtungsanordnung 140 beschrieben wurde, kann die Dichtungsanordnung 130 als einstückiges Element in das Zylinderdeckelgehäuse 103 eingelegt oder eingespritzt werden, was einfacher, schneller und präziser ist als das Montieren einer Reihe von einzelnen Dichtungselementen wie bei bekannten Pneumatikzylindern.

Bevorzugt sind bei erfindungsgemäßen Pneumatikzylindern sowohl der Zylinderkopf als auch der Zylinderdeckel in der beschriebenen erfindungsgemäßen Weise ausgestaltet. Es ist jedoch auch denkbar, dass nur der Zylinderkopf oder der Zylinderdeckel in der beschriebenen erfindungsgemäßen Weise ausgestaltet sind, während die jeweils andere Zylinderabdichteinrichtung in konventioneller Weise ausgestaltet sein kann.

Bevorzugt ist jeweils die gesamte Dichtungsanordnung aus einem einzigen Material, beispielsweise aus einem spritzgussfähigen Material hergestellt. Bevorzugt besteht zwischen der Dichtungsanordnung und dem jeweiligen Gehäuse, in das die Dichtungsanordnung eingelegt oder eingespritzt ist, ein Haftverbund. Dieser kann auf unterschiedliche Weise erreicht werden. Beispielsweise können sich selbstverbindende Materialien für die Dichtungsanordnung und/oder das jeweilige Gehäuse verwendet werden. Hierzu können Kunststoffe, z.B. Polyamide, für das Gehäuse verwendet werden, welche bereits eingemischte Haftpromotoren beinhalten. Beim Einspritzen des Dichtungswerkstoffes bildet sich dann ein Haftverbund zwischen Gehäuse und Dichtungseinrichtung aus.

Ein Haftverbund kann jedoch auch durch Aufbringen eines Haftvermittlers, z.B. auf Silanbasis, auf das Gehäuse, z.B. durch Sprühauftrag oder Tauchen, vor dem Einspritzen der Dichtungskomponente erfolgen. Ferner kann ein Haftverbund durch Plasmaaktivierung der Gehäuseoberfläche und/oder durch Auftrag eines Haftvermittlers durch eine Plasmabeschichtung realisiert werden. Eine Plasmaaktivierung bildet in der Oberfläche des behandelten Bauteils reaktive Gruppen, welche sich chemisch mit der zweiten Komponente verbinden können und so den Haftverbund bilden. Letztlich ist auch ein Haftverbund durch klassisches Verkleben mit geeigneten Klebstoffen, z.B. auf Epoxid- oder Acrylatbasis, von zwei separat hergestellten Bauteilen denkbar. Alternativ kann die Ausgestaltung des Gehäuses und der Dichtungsanordnung auch so sein, dass die aneinander anliegenden Teile einen Formschluss bilden, beispielsweise durch Einbringung entsprechender Rauheiten, in die jeweiligen Oberflächen.

Zusammenfassend lassen sich durch die Erfindung Kosten und Fehlerquellen reduzieren. Auch die Montagezeit und der Aufwand für eine entsprechende Justage einzelner Teile wird reduziert.

## Patentansprüche

1. Dichtungsanordnung (130, 140) für eine Zylinderabdichteinrichtung eines Pneumatikzylinders (100) mit
- einer ersten Dichtungsvorrichtung (131, 141) mit einer Stangendichtung (142) oder einer Zylinderdeckeldichtung (132) und
- einer zweiten Dichtungsvorrichtung (133, 143) mit einer Dämpfungsdichtung (134, 144), wobei die erste Dichtungsvorrichtung und die zweite Dichtungsvorrichtung fest miteinander verbunden und einstückig ausgebildet sind.

2. Dichtungsanordnung nach Anspruch 1, **dadurch gekennzeichnet, dass** die erste Dichtungsvorrichtung (131, 141) und die zweite Dichtungsvorrichtung (133, 143) durch Spritzguss aus demselben Material hergestellt sind.

3. Dichtungsanordnung nach einem der vorstehenden Ansprüche, **dadurch gekennzeichnet, dass** die erste Dichtungsvorrichtung (141) an ihrer von der zweiten Dichtungsvorrichtung(143) abgewandten Stirnseite eine Abstreiflippe (145) aufweist, die einstückig mit der ersten und der zweiten Dichtungsvorrichtung ausgebildet ist.

4. Dichtungsanordnung nach einem der vorstehenden Ansprüche, **dadurch gekennzeichnet, dass** die erste Dichtungsvorrichtung (141) eine Führungsbuchse (108) aufweist, die in einer Aufnahme an der Innenseite der ersten Dichtungsvorrichtung (141) angeordnet ist.

5. Dichtungsanordnung nach einem der vorstehenden Ansprüche, **dadurch gekennzeichnet, dass** die zweite Dichtungsvorrichtung (133, 143) an ihrer von der ersten Dichtungsvorrichtung abgewandten Stirnseite Anschlagpuffer (127, 128) aufweist, die einstückig mit der ersten und der zweiten Dichtungsvorrichtung ausgebildet sind.

6. Dichtungsanordnung nach einem der vorstehenden Ansprüche, **dadurch gekennzeichnet, dass** an der Verbindung zwischen der ersten Dichtungsvorrichtung (131, 141) und der zweiten Dichtungsvorrichtung (133, 143) eine von der Innenseite der Dichtungsanordnung zur Außenseite der Dichtungsanordnung verlaufende Öffnung (114, 115) vorgesehen ist.

7. Dichtungsanordnung nach Anspruch 6, **dadurch gekennzeichnet, dass** die zweite Dichtungsvorrichtung (133, 143) einen von ihrer von der ersten Dichtungsvorrichtung abgewandten Stirnseite zur Außenseite der Dichtungsanordnung verlaufenden Kanal (123, 124) aufweist.

8. Dichtungsanordnung nach Anspruch 7, **dadurch gekennzeichnet, dass** die zweite Dichtungsvorrichtung (133, 143) eine Einstellvorrichtung (121) zur Einstellung der Durchflussmenge des Kanals aufweist.

9. Zylinderabdichteinrichtung für einen Pneumatikzylinder (100) mit
- einem Zylinderabdichtgehäuse (103a, 104a), und
- einer Dichtungsanordnung (130, 140) nach einem der vorstehenden Ansprüche, die innerhalb des Zylinderabdichtgehäuses angeordnet ist.

10. Zylinderabdichteinrichtung nach Anspruch 9, **dadurch gekennzeichnet, dass** die Dichtungsanordnung (130, 140) in das Zylinderabdichtgehäuse (103a, 104a), an dessen Innenseite anliegend, eingesetzt oder eingespritzt ist.

11. Zylinderabdichteinrichtung nach einem der Ansprüche 9 oder 10, **dadurch gekennzeichnet, dass** zwischen dem Zylinderabdichtgehäuse (103a, 104a) und der Dichtungsanordnung (130, 140) ein Haftverbund besteht.

12. Zylinderabdichteinrichtung nach Anspruch 11, **dadurch gekennzeichnet, dass** der Haftverbund durch Verwendung sich selbst verbindender Materialien für das Zylinderabdichtgehäuse und die Dichtungsanordnung oder durch Verwendung eines Haftvermittlers zwischen dem Zylinderabdichtgehäuse und der Dichtungsanordnung erreicht ist.

13. Zylinderabdichteinrichtung nach Anspruch 9 oder 10, **dadurch gekennzeichnet, dass** ein Haftverbund durch Behandlung der Oberfläche der Innenseite des Zylinderabdichtgehäuses und/oder der Oberfläche der Außenseite der Dichtungsanordnung vor Einbringen der Dichtungsanordnung in das Zylinderabdichtgehäuse erreicht ist.

14. Zylinderabdichteinrichtung nach einem der Ansprüche 9 bis 14, **dadurch gekennzeichnet, dass** zwischen dem Zylinderabdichtgehäuse (103a, 104a) und der Dichtungsanordnung (130, 140) ein Formschluss besteht.

15. Pneumatikzylinder (100) mit einem Zylinderrohr (102), einem Zylinderkopf (104), einem Zylinderdeckel (103) und einer Kolbenstange (106) mit einem Kolben (118), **dadurch gekennzeichnet, dass** der Zylinderkopf und/oder der Zylinderdeckel als Zylinderabdichteinrichtung nach einem der Ansprüche 9 bis 14 ausgestaltet ist.
